(19) Europäisches Patentamt

European Patent Office

Office européen des brevets

(11) **EP 1 055 097 B1**

(12) **FASCICULE DE BREVET EUROPEEN**

(45) Date de publication et mention
de la délivrance du brevet:
**12.10.2005 Bulletin 2005/41**

(21) Numéro de dépôt: **99958324.8**

(22) Date de dépôt: **14.12.1999**

(51) Int Cl.⁷: **G01B 11/14**, G01B 11/02,
G01B 11/27, G01B 11/26

(86) Numéro de dépôt international:
**PCT/FR1999/003132**

(87) Numéro de publication internationale:
**WO 2000/036369 (22.06.2000 Gazette 2000/25)**

(54) **PROCEDE DE CONTROLE DE PERPENDICULARITE D'UNE PIECE CYLINDRIQUE, TELLE QU'UNE PASTILLE DE COMBUSTIBLE NUCLEAIRE**

LOTÜBERWACHUNGSVERFAHREN FÜR ZYLINDRISCHE OBJEKTE WIE KERNBRENNSTOFFTABLETTEN

METHOD FOR CONTROLLING PERPENDICULARITY OF A CYLINDRICAL PART, SUCH AS A NUCLEAR FUEL PELLET

(84) Etats contractants désignés:
**BE DE GB SE**

(30) Priorité: **15.12.1998 FR 9815824**

(43) Date de publication de la demande:
**29.11.2000 Bulletin 2000/48**

(73) Titulaire: **COMPAGNIE GENERALE DES MATIERES NUCLEAIRES**
**78140 Velizy Villacoublay (FR)**

(72) Inventeurs:
• **MARCHAND, Michel**
**F-78330 Fontenay-le-Fleury (FR)**

• **RICHAUD, Christian**
**F-84290 Cairanne (FR)**

(74) Mandataire: **Audier, Philippe André et al**
**Brevalex,**
**3, rue du Docteur Lancereaux**
**75008 Paris (FR)**

(56) Documents cités:
**FR-A- 2 644 238          US-A- 3 801 203**
**US-A- 5 774 210**

## Description

### Domaine technique

L'invention concerne un procédé destiné à contrôler la perpendicularité des faces planes d'une pièce cylindrique, par rapport à l'axe de symétrie de cette pièce (voir par exemple le document US-A-5 774 210).

Plus précisément, l'invention concerne un procédé permettant de mesurer un défaut de perpendicularité d'au moins une génératrice de la pièce, par rapport à l'une de ses faces, sur une longueur donnée de la pièce.

Le procédé selon l'invention peut être utilisé dans tous les cas où l'on désire effectuer une mesure très précise de la perpendicularité d'une pièce cylindrique. Une application privilégiée concerne le contrôle de la perpendicularité des pastilles de combustible nucléaire, lors de leur fabrication.

### Etat de la technique

Les crayons combustibles utilisés dans les réacteurs nucléaires comprennent des pastilles cylindriques de combustible nucléaire, montées bout à bout dans des gaines métalliques. Lors de la fabrication des pastilles, leurs dimensions et leur géométrie, notamment leur perpendicularité, doivent donc être régulièrement contrôlées, afin de vérifier qu'elles sont bien conformes aux tolérances requises.

Dans les ateliers de fabrication existants, les dimensions des pastilles de combustible nucléaire sont mesurées à l'aide de palpeurs mécaniques et de moyens de mesure micrométriques. La précision des mesures ainsi effectuée est de l'ordre de 20 μm.

Par ailleurs, la perpendicularité des faces circulaires des pastilles, par rapport à leur axe de symétrie, est généralement contrôlée par sondage. A cet effet, la pastille prélevée est habituellement disposée horizontalement sur des rouleaux, également horizontaux. La mise en rotation des rouleaux ou d'un galet presseur entraîne celle de la pastille. Les mesures sont alors réalisées par un palpage micrométrique de l'une des deux faces circulaires des pastilles. La précision des mesures ainsi réalisées est comparable à celle des mesures dimensionnelles, c'est-à-dire de l'ordre de 20 μm.

Cette technique usuelle de contrôle de perpendicularité a aussi pour inconvénients de ne pas permettre le contrôle de pastilles ayant une collerette réduite ou inexistante et de ne pas permettre, sans adaptation, le contrôle de pastilles de diamètres différents.

### Exposé de l'invention

L'invention a précisément pour objet un procédé de contrôle de perpendicularité d'une pièce cylindrique, telle qu'une pastille de combustible nucléaire, procurant une précision de mesure sensiblement plus élevée que les techniques de contrôle existantes, c'est-à-dire supérieure à 8 μm.

L'invention a aussi pour objet un procédé permettant de contrôler, sans aucune modification, la perpendicularité de pièces cylindriques de différents diamètres et de différentes longueurs.

En outre, l'invention concerne un procédé de contrôle de la perpendicularité de pièces cylindriques procurant des mesures stables dans le temps, et dont la mise en oeuvre est compatible avec la réalisation des contrôles à l'intérieur d'une boîte à gants.

Conformément à l'invention, il est proposé un procédé de contrôle de perpendicularité d'une face plane d'une pièce cylindrique, par rapport à un axe de symétrie de ladite pièce, caractérisé en ce qu'il comprend les étapes consistant à :

-   poser ladite face de la pièce sur un plan support fixe, de telle sorte que ledit axe de symétrie passe sensiblement par un point de référence fixe dudit plan support ; et
-   déterminer optiquement, dans au moins un plan de mesure passant par le point de référence et perpendiculaire au plan support, un défaut de perpendicularité d'au moins une génératrice de la pièce, contenue dans le plan de mesure, par rapport à ladite face, le défaut de perpendicularité étant déterminé en mesurant optiquement, à deux niveaux différents de la pièce selon son axe de symétrie, la distance qui sépare chaque génératrice d'une droite de référence fixe perpendiculaire au plan support et contenue dans le plan de mesure, puis en calculant la différence entre les distances mesurées à chacun des deux niveaux.

Dans un mode de réalisation préféré de l'invention, on détermine optiquement les défauts de perpendicularité des deux génératrices de la pièce, contenues dans le plan de mesure.

Dans ce mode de réalisation préféré, on détermine également optiquement les défauts de perpendicularité dans deux plans de mesure perpendiculaires entre eux.

Dans ce cas, on calcule avantageusement un défaut maximum de perpendicularité $X_{max}$ en appliquant la relation :

$$X_{max} = \sqrt{X1^2 + X2^2},$$

où X1 et X2 représentent les plus grands des défauts de perpendicularité des deux génératrices, respectivement dans chacun des deux plans de mesure.

Avantageusement, on mesure simultanément les distances à chacun des deux niveaux, au moyen d'au moins une paire de micromètres à balayage laser pourvus de fentes émettrices parallèles au plan de mesure, les fentes précitées émettant des nappes laser qui coupent un axe de référence perpendiculaire au plan support, passant par le point de référence, à chacun des deux niveaux.

Lorsque les mesures sont effectuées dans deux plans de mesure perpendiculaires entre eux, on mesure alors simultanément les distances dans ces deux plans, au moyen de deux paires de micromètres à balayage laser.

Chacun des micromètres à balayage laser utilisés comprend avantageusement un émetteur et un récepteur situés de part et d'autre de la pièce. L'émetteur utilisé est pourvu de la fente émettrice et doit être disposé à une distance de $60 \pm 2$ mm de l'axe de référence. Le récepteur est aligné avec l'émetteur et disposé à une distance d'environ 95 mm de cet axe.

Afin que l'écartement entre les deux niveaux de mesure soit compatible avec la plus petite longueur des pièces à contrôler, malgré l'encombrement des micromètres, on dispose avantageusement les deux micromètres de chaque paire de micromètres de telle sorte que les nappes laser émises par leurs fentes émettrices soient respectivement parallèle au plan support et inclinée par rapport à ce plan.

Dans le mode de réalisation préféré de l'invention, on monte sur le plan support, pour chaque paire de micromètres à côté et à distance de la pièce, une tige de référence dont la génératrice, tournée vers la pièce et située dans le plan de mesure, matérialise la droite de référence. Plus précisément, on monte avantageusement chaque tige de référence à la même distance de l'émetteur que l'axe de référence.

Afin d'assurer une bonne reproductibilité des mesures, le plan support est avantageusement matérialisé par trois zones d'appui, régulièrement réparties autour du point de référence.

Dans une application privilégiée de l'invention, les pièces cylindriques contrôlées sont des pastilles de combustible nucléaire.

**Brève description des dessins**

On décrira, à présent, à titre d'exemple non limitatif, un mode de réalisation préféré de l'invention, en se référant aux dessins annexés, dans lesquels :

- la figure 1 est une vue en perspective qui illustre schématiquement le contrôle de la perpendicularité d'une pastille de combustible nucléaire par le procédé selon l'invention ;
- la figure 2 est une vue de dessus schématique, illustrant le principe de la mesure ;
- la figure 3 est une vue de côté, à plus grande échelle, illustrant les mesures et les calculs effectués par le procédé selon l'invention dans le cas d'un défaut de perpendicularité volontairement accentué ; et
- la figure 4 est une vue en perspective qui représente un mode de réalisation préféré du plan support sur lequel est placée la pastille à contrôler.

**Description détaillée d'un mode de réalisation préféré de l'invention**

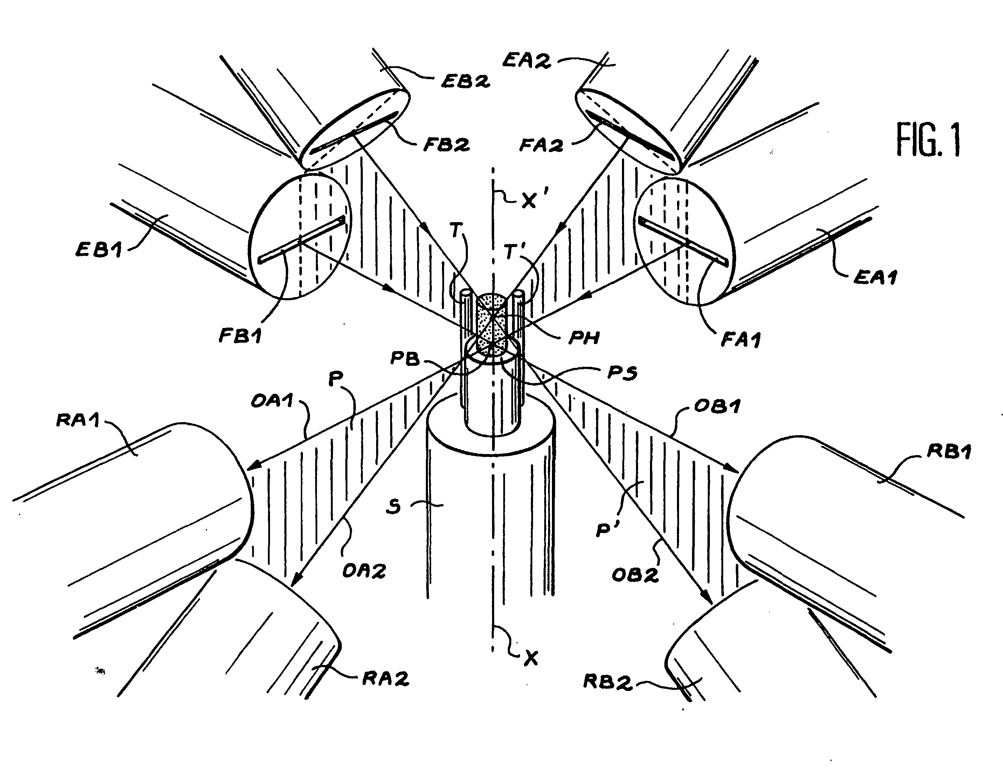

Conformément à l'invention et comme l'illustrent les figures 1 à 4, le contrôle de la perpendicularité de pièces cylindriques, telles que des pastilles 10 de combustible nucléaire, est réalisé grâce à des mesures optiques, qui permettent de satisfaire aux exigences de précision requises.

Plus précisément, dans le mode de réalisation préféré représenté, les mesures sont effectuées par quatre micromètres à balayage laser. Ces quatre micromètres peuvent notamment être des micromètres de type LS 3033 SO de la Société KEYENCE.

Chacun des micromètres comprend un émetteur, qui émet une nappe laser au travers d'une fente horizontale, et un récepteur situé strictement dans l'axe de l'émetteur correspondant.

De plus, les micromètres sont regroupés deux à deux, de façon à former deux paires de micromètres situés dans deux plans verticaux perpendiculaires entre eux.

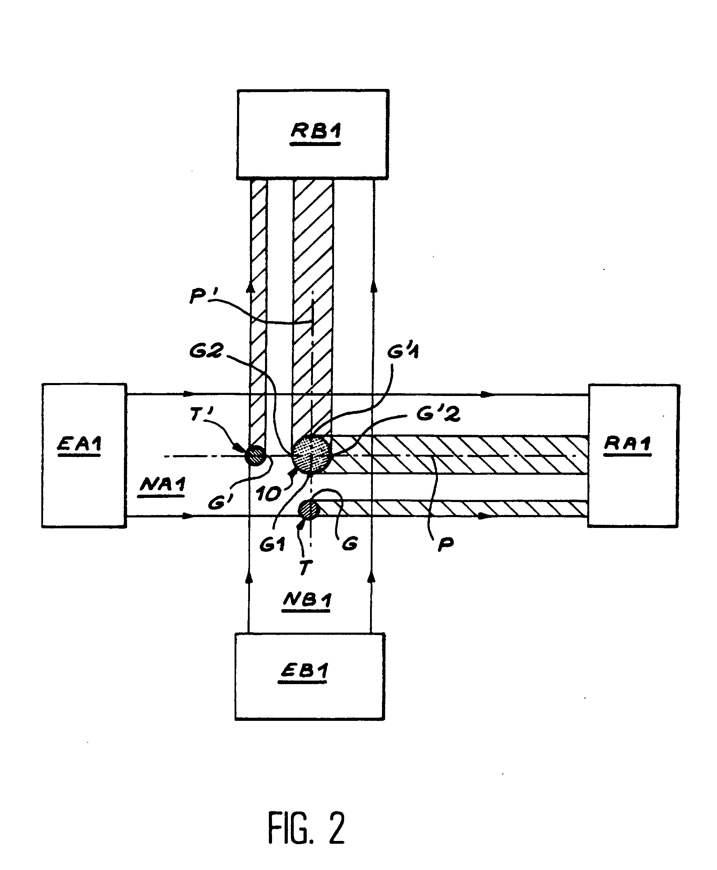

De façon plus précise et comme l'illustre schématiquement la figure 1, une première paire de micromètres comprend un premier micromètre A1, d'axe OA1, horizontal, ainsi qu'un deuxième micromètre A2, d'axe OA2 incliné. Le premier micromètre A1 est matérialisé par un émetteur EA1 et par un récepteur RA1. Le deuxième micromètre A2 est matérialisé par un émetteur EA2 et par un récepteur RA2. Les axes respectifs OA1 et OA2 de ces deux micromètres A1 et A2 sont contenus dans un premier plan vertical P. Sur la figure 1, les références FA1 et FA2 désignent les fentes émettrices respectives des émetteurs EA1 et EA2, par lesquelles sortent les nappes laser planes des micromètres A1 et A2. La nappe laser NA1 émise par la fente FA1 de l'émetteur EA1 est illustrée sur la figure 2.

La deuxième paire de micromètres comprend un premier micromètre B1, d'axe horizontal OB1 ainsi qu'un deuxième micromètre B2, d'axe OB2 incliné. Le premier micromètre B1 est matérialisé par un émetteur EB1 et par un récepteur RB1. Le deuxième micromètre B2 est matérialisé par un émetteur EB2 et par un récepteur RB2. Les axes OB1 et OB2 sont contenus dans un deuxième plan vertical P', perpendiculaire au plan P contenant les axes OA1 et OA2 de la première paire de micromètres A1 et A2. Sur la figure 1, les références FB1 et FB2 désignent les fentes émettrices par lesquelles les nappes laser planes des micromètres B1 et B2 sortent respectivement des émetteurs EB1 et EB2. La nappe laser émise par la fente FB1 de l'émetteur EB1 est illustrée en NB1 sur la figure 2.

Comme l'illustre également la figure 1, les plans P et P', dans lesquels se trouvent chacune des paires de micromètres A1, A2 et B1, B2, se coupent selon un axe de référence vertical XX'. Les micromètres et, par conséquent, l'axe de référence XX', occupent des emplacements fixes.

Par ailleurs, les axes OA1 et OB1 des micromètres A1 et B1 sont placés au même niveau, de façon à se couper en un point bas fixe PB de l'axe de référence XX'.

De façon comparable, les axes inclinés OA2 et OB2 des micromètres A2 et B2 sont agencés de façon à se couper en un point haut fixe PH de l'axe de référence XX'.

La distance qui sépare les points PB et PH est choisie de façon à être sensiblement inférieure à la longueur de la pastille cylindrique 10 la plus courte susceptible d'être contrôlée.

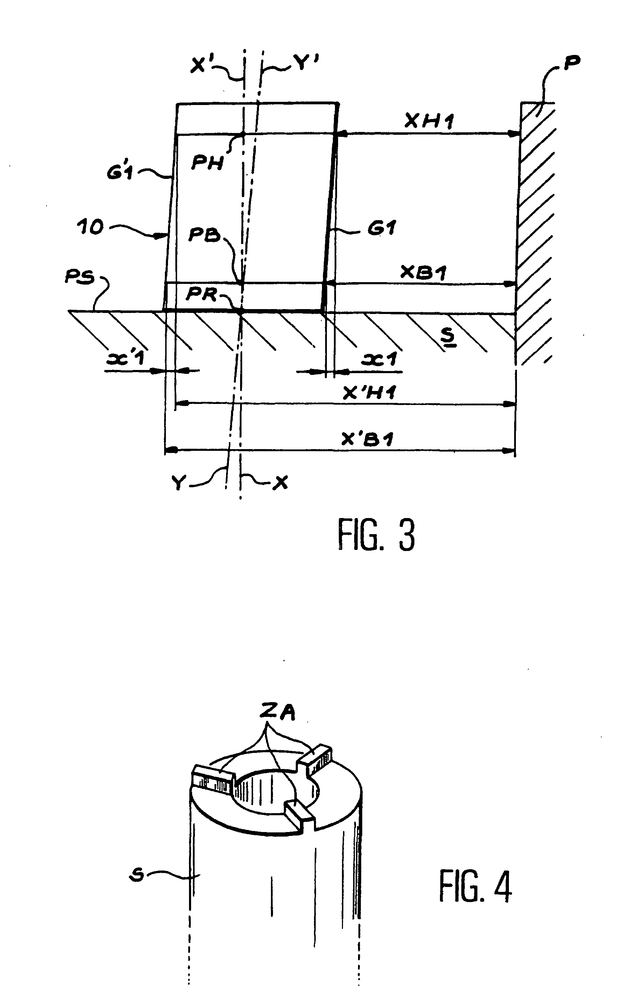

Comme l'illustre aussi la figure 1, l'installation de contrôle comprend de plus un support fixe S, agencé selon l'axe de référence vertical XX', en dessous du point bas PB. A son extrémité haute, le support S forme un plan support horizontal PS, situé à une petite distance en dessous du point bas PB d'intersection des axes OA1 et OB1. Le plan support PS est prévu pour recevoir une pastille 10 à contrôler. Plus précisément, la pastille 10 est posée sur le plan support PS par l'une de ses faces planes circulaires, de telle sorte que son axe de symétrie YY' (figure 3) coïncide approximativement avec l'axe de référence vertical XX'. Le point d'intersection du plan support PS, avec l'axe XX', est appelé « point de référence » et désigné par la référence PR sur la figure 3.

Comme on l'a illustré sur la figure 4, le plan support PS du support fixe S peut être matérialisé par trois zones d'appui ZA, régulièrement réparties autour du point de référence PR. Ces zones d'appui ZA peuvent notamment être obtenues par un usinage de la face supérieure plane du support fixe S, par exemple en usinant dans cette face un évidement central et trois évidements périphériques.

Pour compléter l'installation, on voit notamment sur les figures 1 et 2 que le support fixe S porte également deux tiges de référence T et T' cylindriques et verticales, dont les axes sont situés respectivement dans les plans P' et P. Les deux tiges de référence T et T' sont placées à une même distance de l'axe de référence vertical XX'. Cette distance est supérieure au rayon des pastilles 10 à contrôler, de telle sorte que la pastille 10 ne soit pas en contact avec les tiges. En revanche, la distance qui sépare les tiges de référence T et T' de l'axe de référence XX' est inférieure à la moitié de la largeur des nappes laser de chacun des micromètres, de telle sorte que la tige de référence T se trouve sur la trajectoire des nappes laser émises par les émetteurs EA1 et EA2 et que la tige de référence T' se trouve sur la trajectoire des nappes laser issues des émetteurs EB1 et EB2.

En outre, et comme le montre en particulier la figure 2, le diamètre des tiges de référence T et T' est suffisamment grand pour que la tige T déborde légèrement des nappes laser issues des émetteurs EA1 et EA2 et pour que la tige T' déborde légèrement des nappes laser issues des émetteurs EB1 et EB2. Un débordement d'environ 1 mm de chacune des tiges T et T', par rapport aux nappes laser correspondantes, peut notamment être prévu. Ce débordement permet de limiter au maximum les effets de bordure.

Afin d'assurer une précision optimale des mesures, chacun des émetteurs EA1 et EB1 est disposé à une distance de $60 \pm 2$ mm du point bas PB d'intersection de son axe respectif OA1, OB1, avec l'axe de référence vertical XX'. De même, chacun des émetteurs EA2 et EB2 est disposé à une distance de $60 \pm 2$ mm du point haut PH d'intersection de son axe respectif OA2, OB2, avec l'axe de référence vertical XX'.

Par ailleurs, chacun des récepteurs RA1 et RB1 est disposé à une distance d'environ 95 mm du point bas PB et chacun des récepteurs RA2 et RB2 est disposé à une distance d'environ 95 mm du point haut PH.

La disposition de la tige de référence T dans le plan P', permet de placer cette tige sensiblement à la même distance des émetteurs EA1 et EA2 que la pastille 10 contrôlée, tout en évitant de perturber les mesures effectuées par la deuxième paire de micromètres B1 et B2.

De façon comparable, le montage de la tige de référence T' dans le plan P permet de placer cette tige T' sensiblement à la même distance des émetteurs EB1 et EB2 que la pastille 10 à contrôler, sans perturber les mesures effectuées par la première paire de micromètres A1 et A2.

Dans l'agencement, qui vient d'être décrit et comme on le comprendra mieux dans la description qui va suivre, le plan P' constitue le plan de mesure pour les micromètres A1 et A2 et le plan P constitue le plan de mesure pour les micromètres B1 et B2. Les fentes FA1 et FA2 d'émission des nappes laser de la première paire de micromètres A1 et A2 sont parallèles au plan de mesure P'. De façon comparable, les fentes émettrices FB1 et FB2, par lesquelles les nappes laser sortent de la deuxième paire de micromètres B1 et B2, sont parallèles au plan de mesure P.

Le procédé de contrôle mettant en oeuvre cette installation et illustrant un mode de réalisation préféré de l'invention va à présent être décrit.

Lorsqu'on désire contrôler la perpendicularité d'une pièce cylindrique, telle qu'une pastille 10 de combustible nucléaire, on pose une face plane circulaire de cette pastille 10 sur le plan support PS, de telle sorte que l'axe de symétrie YY' de la pastille coïncide approximativement avec l'axe vertical XX'. L'axe de symétrie de la pastille 10 passe alors sensiblement par le point de référence PR du plan support PS, comme l'illustre la figure 3. Il est à noter que la répétabilité de la pose de la pastille 10 sur le plan support PS est particulièrement bonne lorsqu'on donne à ce plan support la géométrie illustrée sur la figure 4.

Lorsque l'installation est implantée dans une boîte à gants, comme l'impose le contrôle des pastilles de combustible nucléaire, la mise en place de la pastille 10 sur le plan support PS peut être effectuée par une pince robotisée. Cette mise en place ne pose pas de problème particulier, du fait que le contrôle est effectué par des mesures optiques qui permettent de libérer totalement l'espace situé au-dessus du plan support PS.

Lorsque la pastille 10 repose sur le plan support PS, les quatre micromètres A1, A2, B1 et B2 sont mis en oeuvre simultanément, afin d'effectuer les mesures qui vont à présent être décrites, en se référant aux figures 2 et 3.

Comme le montre la figure 2, sur laquelle n'apparaissent que les micromètres A1 et B1, la nappe laser NA1, NB1, produite par l'émetteur de chaque micromètre projette, sur son récepteur, les ombres en vraie grandeur, c'est-à-dire à l'échelle 1, de la pastille 10 et de la tige T, T', située dans le plan de mesure du micromètre considéré.

Comme l'illustre, en particulier, la figure 3, il est ainsi possible de mesure, aux niveaux du point bas PB et du point haut PH, les distances horizontales entre les deux génératrices de la pastille 10 située dans le plan de mesure et la génératrice tournée vers cette pastille de la tige de référence T, T', située dans le plan de mesure. Cette dernière génératrice est désignée par la référence G pour la tige T et par la référence G' pour la tige T'. Elle constitue une droite de référence, dans chacun des plans de mesure P et P'.

Ainsi, le micromètre A1 permet de mesurer, dans le plan de mesure P', la distance XB1 qui sépare la droite de référence G de la génératrice G1, la plus proche de la tige T, de la pastille 10. Le micromètre A1 mesure également, dans ce même plan P', la distance X'B1 qui sépare la droite de référence G de la génératrice G'1, la plus éloignée de la tige T, de la pastille 10. Les distances XB1 et X'B1 sont mesurées à hauteur du point bas PB.

Dans le même plan de mesure P', qui correspond au plan de la figure 3, le micromètre A2 mesure, au niveau du point haut PH, la distance XH1 qui sépare la droite de référence G de la génératrice G1 de la pastille 10, ainsi que la distance X'H1 qui sépare la droite de référence G de la génératrice G'1 de la pastille 10.

Dans le plan de mesure vertical P perpendiculaire au plan de mesure P', les micromètres B1 et B2 effectuent des mesures comparables, respectivement au niveau du point bas PB et au niveau du point haut PH. Plus précisément, le micromètre B1 mesure, au niveau du point bas PB, les distances XB2 et X'B2 qui séparent la droite de référence G' respectivement des génératrices G2 et G'2 de la pastille 10 situées dans la plan P. De même, le micromètre B2 mesure, au niveau du point haut PH, les distances XH2 et X'H2 séparant la droite de référence G' respectivement des génératrices G2 et G'2 de la pastille 10.

Comme on l'a représenté, de manière accentuée sur la figure 3, un défaut de perpendicularité de la pastille 10 se traduit par des différences entre les distances comparables, mesurées au niveau du point bas PB et au niveau du point haut PH.

Ainsi, un défaut de perpendicularité de la pastille 10 dans le plan P' se traduit par une différence x1 entre les distances XB1 et XH1 mesurées respectivement par les micromètres A1 et A2. Ce même défaut de perpendicularité se traduit également par une différence x'1 entre les distances X'B1 et X'H1 mesurées par les mêmes micromètres.

Dans le plan de mesure P, perpendiculaire au précédent, un défaut de perpendicularité de la pastille 10 se traduit également par une différence x2 entre les distances XB2 et XH2 mesurées respectivement par les micromètres B1 et B2, ainsi que par une différence x'2 entre les distances X'B2 et X'H2 mesurées par les mêmes micromètres.

Les valeurs de ces quatre différences x1, x'1, x2 et x'2 sont calculées à partir des distances mesurées simultanément par les quatre micromètres. Ce calcul peut notamment être effectué par un calculateur (non représenté) associé à l'installation décrite précédemment.

Un défaut maximum théorique de perpendicularité $X_{max}$ est ensuite calculé, en appliquant la relation :

$$X_{max} = \sqrt{X1^2 + X2^2},$$

dans laquelle X1 représente la plus grande des différences x1 et x'1 calculées précédemment et X2 représente la plus grande des différences x2 et x'2 calculées précédemment.

On peut démontrer que la relation qui précède est valable quels que soient les plans de mesure P et P', à condition que la valeur maximum $X_{max}$ reste très petite par rapport au diamètre de la pastille. Cette condition est toujours respectée, puisque le défaut maximum de perpendicularité des pastilles 10 ne doit pas excéder 150 micromètres, alors que le diamètre des pastilles est compris entre 8 mm et 10 mm.

Le procédé, conforme à l'invention, dont un mode de réalisation préféré vient d'être décrit, procure une précision de mesures supérieure à 8 µm, c'est-à-dire sensiblement supérieure à celle des procédés existants.

De plus, la technique de mesure proposée permet, sans aucune adaptation, de contrôler des pièces cylindriques de différentes longueurs, du fait que le point haut PH, auquel s'effectuent les mesures, est déterminé à l'avance, afin de se trouver à l'intérieur des pièces les plus courtes à contrôler.

De façon comparable, il est possible de contrôler, sans adaptation, des pièces de différents diamètres, telles que des pastilles dont le diamètre varie de 8,05 mm à 10,35 mm.

En outre, le procédé, selon l'invention, permet de garantir la stabilité des mesures dans le temps, y compris lors de variations de lumière, d'empoussièrement et de luminosité. La présence des tiges de référence permet notamment de garantir la stabilité des mesures.

Enfin, la technique proposée est facilement utilisable à l'intérieur d'une boîte à gants, ce qui permet de l'appliquer sans difficulté au contrôle des pastilles de combustible nucléaire.

Il est à noter que le procédé selon l'invention peut être simplifié par rapport au mode de réalisation préféré décrit précédemment. Ainsi, au lieu d'effectuer deux mesures sur les génératrices opposées de la pièce dans chaque plan de mesure, il est possible de ne réaliser qu'une seule mesure, toujours aux niveaux des points haut et bas, entre la droite de référence et l'une des génératrices de la pièce. De même, au lieu d'être faites dans deux plans de référence perpendiculaires entre eux, les mesures peuvent être limitées à un seul de ces plans, ce qui conduit à supprimer l'une des paires de micromètres, ainsi que la tige de référence correspondante. En outre, au lieu d'être constituée par une génératrice G ou G' d'une tige de référence T ou T', chaque droite de référence servant aux mesures peut être matérialisée de toute autre manière, sans sortir du cadre de l'invention. Enfin, il est à noter que l'orientation horizontale décrite du plan support PS n'est pas impérative, dans la mesure où un contact étroit entre la face circulaire de la pièce et ce plan support est assuré par un moyen mécanique, pneumatique ou autre. Les orientations des micromètres laser sont alors modifiées en conséquence.

## Revendications

1. Procédé de contrôle de perpendicularité d'une face plane d'une pièce cylindrique (10), par rapport à un axe de symétrie (YY') de ladite pièce, **caractérisé en ce qu'**il comprend les étapes consistant à :

   - poser ladite face de la pièce (10) sur un plan support fixe (PS), de telle sorte que ledit axe de symétrie (YY') passe sensiblement par un point de référence fixe (PR) dudit plan support ; et
   - déterminer optiquement, dans au moins un plan de mesure (P, P') passant par le point de référence (PR) et perpendiculaire au plan support (PS), un défaut de perpendicularité (x1, x'1 ; x2, x'2) d'au moins une génératrice (G1, G'1 ; G2, G'2) de la pièce, contenue dans le plan de mesure, par rapport à ladite face, en mesurant optiquement, à deux niveaux différents de la pièce (10) selon son axe de symétrie (YY'), la distance qui sépare chaque génératrice (G1, G'1 ; G2, G'2) d'une droite de référence fixe (G ; G') perpendiculaire au plan support (PS) et contenue dans le plan de mesure (P', P), puis en calculant la différence (x1, x'1 ; x2, x'2) entre les distances mesurées à chacun des deux niveaux.

2. Procédé selon la revendication 1, dans lequel on détermine les défauts de perpendicularité des deux génératrices (G1, G'1 ; G2, G'2) de la pièce (10), contenues dans le plan de mesure (P', P).

3. Procédé selon l'une quelconque des revendications 1 et 2 dans lequel on détermine les défauts de perpendicularité dans deux plans de mesure (P', P) perpendiculaires entre eux.

4. Procédé selon les revendications 2 et 3 combinées, dans lequel on calcule un défaut maximum de perpendicularité $X_{max}$ en appliquant la relation :

$$X_{max} = \sqrt{X1^2 + X2^2},$$

   où X1 et X2 représentent les plus grands des défauts de perpendicularité (x1, x'1 ; x2, x'2) des deux génératrices, respectivement dans chacun des deux plans de mesure (P'1, P).

5. Procédé selon l'une quelconque des revendications précédentes, dans lequel on mesure simultanément les distances à chacun des deux niveaux, au moyen d'au moins une paire de micromètres (A1, A2 ; B1, B2) à balayage laser pourvus de fentes émettrices (FA1, FA2 ; FB1, FB2) parallèles au plan de mesure (P', P), lesdites fentes émettant des nappes laser qui coupent un axe de référence (XX') perpendiculaire au plan support (PS), passant par ledit point de référence (PR), à chacun desdits niveaux.

6. Procédé selon la revendication 5 combinée avec l'une quelconque des revendications 3 et 4, dans lequel on mesure simultanément les distances dans les deux plans de mesure (P', P) au moyen de deux paires de micromètres (A1, A2 ; B1, B2) à balayage laser.

7. Procédé selon l'une quelconque des revendications 5 et 6 dans lequel on utilise des micromètres (A1, A2 ; B1, B2) à balayage laser comprenant chacun un émetteur (EA1, EA2 ; EB1, EB2) et un récepteur (RA1, RA2 ; RB1, RB2) situés de part et d'autres de la pièce (10), ledit émetteur étant pourvu de la fente émettrice et disposé à une distance de 60 ± 2 mm de l'axe de référence (XX'), et ledit récepteur étant aligné avec l'émetteur et disposé à une distance d'environ 95 mm dudit axe de référence.

8. Procédé selon l'une quelconque des revendications 5 à 7, dans lequel les nappes laser émises par les fentes émettrices des deux micromètres de chaque paire sont respectivement parallèle au plan support (PS) et inclinée par rapport à celui-ci.

9. Procédé selon l'une quelconque des revendications précédentes, dans lequel on monte sur le plan support (PS), à côté et à distance de la pièce (10), au moins une tige de référence (T, T') dont une génératrice (G, G') tournée vers la pièce et située dans le plan de mesure matérialise ladite droite de référence.

10. Procédé selon les revendications 7 et 9 combinées, dans lequel on monte chaque tige de référence (T, T') sensiblement à la même distance de l'émetteur que l'axe de référence (XX').

11. Procédé selon l'une quelconque des revendications précédentes, dans lequel on pose la pièce (10) sur un plan support (PS) matérialisé par trois zones d'appui (ZA) régulièrement réparties autour dudit point de référence (PR).

12. Procédé selon l'une quelconque des revendications précédentes, dans lequel la pièce contrôlée est une pastille (10) de combustible nucléaire.

**Patentansprüche**

1. Verfahren zum Steuern der senkrechten Ausrichtung einer flachen Fläche eines zylindrischen Teils (10) in Bezug auf eine Symmetrieachse (YY') des Teils, **dadurch gekennzeichnet, dass** es die folgenden Schritte umfasst, bestehend im:

   - Aufbringen der Fläche des Teils (10) auf eine feststehende Trägerebene (PS) derart, dass die Symmetrieachse (YY') im wesentlichen durch einen feststehenden Bezugspunkt (PR) der Trägerebene hindurchgeht, und
   - optisches Bestimmen auf mindestens einer Messebene (P,P'), die durch den Bezugspunkt (PR) hindurchgeht und zu der Trägerebene (PS) senkrecht ist, eines Fehlers der senkrechten Ausrichtung (x1,x'1;x2,x'2) mindestens einer Generatrix (G1,G'1;G2,G'2) des in der Messebene enthaltenen Teils in Bezug auf die Fläche, indem auf zwei unterschiedlichen Höhen des Teils (10) entlang dessen Symmetrieachse (YY') der Abstand, welcher jede Generatrix (G1,G'1;G2,G'2) von einer feststehenden Bezugsgeraden (G;G') trennt,, die senkrecht zur Trägerebene (PS) ist und in der Messebene (P', P) enthalten ist, optisch gemessen wird, und anschließend die Differenz (x1,x'1;x2,x'2) zwischen den auf jeder der beiden Höhen gemessenen Abständen berechnet wird.

2. Verfahren nach Anspruch 1, wobei die Fehler der senkrechten Ausrichtung der beiden Generatrizen (G1,G'1;G2,G'2) des Teils (10), die in der Messebene (P',P) enhalten sind, bestimmt werden.

3. Verfahren nach einem der Ansprüche 1 oder 2, wobei die Fehler der senkrechten Ausrichtung in zwei zueinander senkrechten Messebenen (P',P) bestimmt werden.

4. Verfahren nach den kombinierten Ansprüchen 2 und 3, wobei ein maximaler Fehler der senkrechten Ausrichtung $X_{max}$ berechnet wird, indem die Beziehung:

$$\text{Xmax} = \sqrt{X1^2 + X2^2},$$

   angewandt wird, wobei X1 und X2 jeweils die größten Fehler der senkrechten Ausrichtung (x1,x'1;x2,x'2) der beiden Generatrizen in jeder der beiden Messebenen (P'1,P) darstellen.

5. Verfahren nach einem der vorangehenden Ansprüche, wobei gleichzeitig die Abstände auf jeder der beiden Höhen mittels mindestens einem Paar von Mikrometern (A1,A2;B1,B2) mit Laserabtastung gemessen werden, die mit zur Messebene (P',P) parallelen Emissionsspalten (FA1,FA2;FB1,FB2) versehen sind, wobei die Spalte Laserstrahlbündel emittieren, welche eine Bezugsachse (XX') senkrecht zur Trägerebene (PS) schneiden und den Bezugspunkt (PR) auf jeder der genannten Höhen durchlaufen.

6. Verfahren nach Anspruch 5 in Kombination mit einem der Ansprüche 3 oder 4, wobei die Abstände in den beiden Messebenen (P'P) mittels zweier Paare von Mikrometern (A1,A2';B1,B2) mit Laserabtastung gleichzeitig gemessen werden.

7. Verfahren nach einem der Ansprüche 5 oder 6, wobei Mikrometer (A1,A2;B1,B2) mit Laserabtastung verwendet werden, die jeweils einen Sender (EA1,EA2;EB1,EB2) und einen Empfänger (RA1,RA2;RB1,RB2) umfassen, welche sich auf beiden Seiten des Teils (10) befinden, wobei der Sender mit einem Emissionsspalt versehen ist und in einem Abstand von 60 ± 2mm von der Bezugsachse (XX') angeordnet ist, und der Empfänger mit dem Sender ausgerichtet ist und in einem Abstand von etwa 95mm von der Bezugsachse angeordnet ist.

8. Verfahren nach einem der Ansprüche 5 bis 7, wobei die von den Emissionsspalten der beiden Mikrometer jedes Paars emittierten Laserstrahlbündel jeweils parallel zur Trägerebene (PS) und in Bezug auf diese geneigt sind.

9. Verfahren nach einem der vorangehenden Ansprüche, wobei in der Trägerebene (PS) neben dem Teil (10) und im Abstand zu diesem mindestens ein Bezugsstab (T,T') angebracht wird, von dem eine dem Teil zugewandte und in der Messebene gelegene Generatrix (G,G') die Bezugsgerade verkörpert.

10. Verfahren nach den kombinierten Ansprüchen 7 und 9, wobei jeder Bezugsstab (T,T') im wesentlichen im gleichen Abstand von dem Sender wie die Bezugsachse (XX') angebracht wird.

11. Verfahren nach einem der vorangehenden Ansprüche, wobei das Teil (10) auf eine Trägerebene (PS) aufgebracht wird, die von drei Auflagezonen (ZA) gebildet wird, die um den Bezugspunkt (PR) herum regelmäßig verteilt sind.

12. Verfahren nach einem der vorangehenden Ansprüche, wobei das gesteuerte Teil eine Kernbrennstofftablette (10) ist.

**Claims**

1. A process for controlling the perpendicularity of a plane face of a cylindrical component (10), relative to an axis of symmetry (YY') of said component, **characterised in that** it includes the steps consisting in:

   - placing said face of the component (10) on a fixed support plane (PS), such that said axis of symmetry (YY') passes approximately through a fixed point of reference (PR) of said support plane; and
   - determining optically, in at least one measuring plane (P, P') passing through the point of reference (PR) and perpendicular to the support plane (PS), an out-of-true perpendicularity (x1, x'1; x2, x'2) of at least one generator (G1, G'1; G2, G'2) of the component, contained in the measuring plane, relative to said face, by measuring optically, at two different levels of the component (10) along its axis of symmetry (YY'), the distance separating each generator (G1, G'1; G2, G'2) from a fixed straight line of reference (G; G') perpendicular to the support plane (PS) and contained in the measuring plane (P', P), then by calculating the difference (x1, x'1; x2, x'2) between the distances measured at each of the two levels.

2. A process according to claim 1, in which any out-of-true perpendicularity of the two generators (G1, G'1; G2, G'2) of the component (10), contained in the measuring plane (P', P) is determined.

3. A process according to any one of claims 1 and 2 in which any out-of-true perpendicularity in the two measuring planes (P', P) perpendicular to each other is determined.

4. A process according to claims 2 and 3 combined, in which a maximum out-of-true perpendicularity $X_{max}$ is calculated by applying the equation:

$$X_{max} = \sqrt{X1^2 + X2^2},$$

where X1 and X2 represent the greatest out-of-true perpendicularity (x1, x'1; x2, x'2) of the two generators, in each of the two measuring planes (P'1, P) respectively.

5. A process according to any one of the previous claims, in which distances are measured simultaneously at each of the two levels, by means of at least one pair of laser scanning micrometers (A1, A2; B1, B2) provided with emitting slots (FA1, FA2; FB1, FB2) parallel to the measuring plane (P', P), said slots emitting laser arrays which cut an axis of reference (XX') perpendicular to the support plane (PS), passing through said point of reference (PR), at each of said levels.

6. A process according to claim 5 combined with any one of claims 3 and 4, wherein the distances in the two measuring planes (P', P) are measured simultaneously by means of two pairs of laser scanning micrometers (A1, A2; B1, B2).

7. A process according to any one of claims 5 and 6 in which laser scanning micrometers (A1, A2; B1, B2) are used each including an emitter (EA1, EA2; EB1, EB2) and a receiver (RA1, RA2; RB1, RB2) located on either side of the component (10), said emitter being provided with the emitting slot and placed at a distance of $60 \pm 2$ mm from the axis of reference. (XX'), and said receiver being aligned with the emitter and placed at a distance of about 95 mm from said axis of reference.

8. A process according to any one of claims 5 to 7, in which the laser arrays emitted by the emitting slots of the two micrometers of each pair are respectively parallel to the support plane (PS) and inclined relative to it.

9. A process according to any one of the previous claims, in which on the support plane (PS), adjacent to and at a distance from the component (10) is mounted at least one rod of reference (T, T') of which a generator (G, G') turned towards the component and located in the measuring plane substantiates said straight line of reference.

10. A process according to claims 7 and 9 combined, in which each rod of reference (T, T') is mounted approximately at the same distance from the emitter as the axis of reference (XX').

11. A process according to any one of the previous claims, in which the component (10) is placed on a support plane (PS) substantiated by three support zones (ZA) evenly distributed around said point of reference (PR).

12. A process according to any one of the previous claims, in which the controlled component is a nuclear fuel pellet (10).

FIG. 1

EP 1 055 097 B1

FIG. 2

FIG. 3

FIG. 4